# EUROPEAN PATENT SPECIFICATION

(11) **EP 1 006 429 B1**
(45) Date of publication and mention of the grant of the patent: **25.06.2008**
(21) Application number: 99124231.4
(22) Date of filing: 03.12.1999
(51) Int. Cl.: G06F 3/12

(54) **Interface card for connecting a recording device to a host computer**
Schnittstellenkarte um ein Aufzeichnungsgerät mit einem Hauptrechner zu verbinden
Carte d'interface pour connecter un dispositif d'enregistrement à un ordinateur hôte

(30) Priority: 03.12.1998 JP 34425398
(43) Date of publication of application: 07.06.2000
(73) Proprietor: Seiko Epson Corporation, Shinjuku-ku Tokyo 163-0811 (JP)
(72) Inventor: Kawase, Yuji, c/o Seiko Epson Corporation, Suwa-shi, Nagano-ken 392-8503 (JP)
(74) Representative: Hoffmann, Eckart

(56) References cited:
- EP-A2- 0 930 718
- GB-A- 2 292 820
- US-A- 5 463 772

## Description

The present invention relates to an interface card adapted to be detachably mounted in a recording device for connecting the recording device to a host computer. The invention also relates to a recording device including such interface card and a method of sending data from the host computer via the interface card to the recording device.

The amount of data that are exchanged between a host computer and a recording device for recording data on a recording medium has continuously increased during the last years due to the increasing density of recording or printing, the increase of number of colors being expressed, the increase of the number of recording or printing modes, etc. The transfer rate (amount of data transferred per unit time from the host computer to the recording device or vice versa) has also increased owing to the speed of data processing in the host computer and recording device getting higher and higher. This increase of the transfer rate is limited, however, to the maximum transfer rate of the currently available interface standards commonly employed in recording devices (such as RS232C or Centronics). On the other hand, there is a continued strong demand for a higher speed of recording or printing processes, which requires a data transfer faster than the transfer rate of currently used interface standards.

A known possibility to overcome the limit set by the interfaces is the technique of compression/decompression (referred to as C/D below). The amount of data to be transferred is decreased by compressing the data with a predetermined algorithm on the sending side and performing decompression on the receiving side to restore the original data.

JP-A-07-144441 discloses an image output device capable of receiving compressed data from a host computer via an interface and for decompressing the data. The image output device includes multiple decompression units with different decompression algorithms and means, responsive to corresponding information from the host computer, for selecting one of these units. Thus, depending on the algorithm used by the host computer to compress the data, the compatible algorithm for the decompression can be selected in the image output device. This allows for using the same image output device with different host computers using different compression algorithms.

JP-A-08-164640 discloses a printer capable of receiving compressed data from a host computer via an interface and for decompressing the data. In this case, the host computer first uploads a decompression program to the printer. The printer decompresses the subsequently sent compressed data using this program. In this way the printer can be adapted to that one of various C/D algorithms that is used by a particular host computer. In another embodiment the same document discloses a network interface board for connecting a printer to a network. Here, the decompression function is implemented on the interface board rather than on a control board of the printer. Changing the decompression algorithm requires changing the interface board or at least the part of it that is responsible for the decompression.

Incidentally, a printer having an interface card detachably mounted in the printer is well known. For such printer, various interface cards corresponding to different interface standards, such as the RS232, Centronics or USB (Universal Serial Bus) are available. Accordingly, by replacing the interface card, the interface standard to be used for data exchange with a host computer can be changed to the necessary or most suitable one.

As will be understood, communication between a host computer and a recording device using compression/decompression techniques, requires that the same or compatible algorithms be used on both sides, the sending and the receiving side.

In the prior art of JP-A-07-144441, the image output device has predetermined built-in C/D algorithms to select from. When new and better algorithms become available, host computers using such new algorithms can no longer communicate with the device.

In case of the JP-A-08-164640, where the decompression program is uploaded into the printer, since the data have to be transmitted uncompressed, substantial time is required to make the printer ready to print. On the other hand, using the compression function of the network interface board, does not allow to employ printers having their own C/D function such as the device disclosed in JP-A-07-144441.

An object of the prevent invention is overcome the problems involved in the prior art and to provide an exchangeable interface card for use in a recording device that allows for a flexible use of C/D techniques in the communication between a host computer and a recording device and is also suitable for use with a recording device having its own C/D function. Another object of the invention is to provide a recording device using such interface card and a method of exchanging data between the host computer and the recording device.

These objects are solved with an interface card as claimed in claim 1, a recording device as claimed in claim 6, a method as claimed in claim 12 and a recording medium as claimed in claim 13. Preferred embodiments of the invention are subject-matter of the dependent claims.

By replacing the interface card, the invention allows the C/D function provided in the recording device to be easily replaced in compliance with that one used in the host computer. Thus, it is easy to use the same recording device with a variety of host computers having different C/D functions. In addition, the interface card is capable of comparing the C/D performance of the interface card itself with that one, if any, of the control board of the recording device. This allows, when both the interface card and the control board have a C/D function, to decrease time required for data decompression or compression by using that one of the two functions that performs better. The present invention is especially beneficial if the interface card is replaced and performance of the C/D function implemented on it is changed.

EP 0930718 discloses an interface card comprising a dual interface including a C/D function to compare results and detect C/D errors.

Preferred embodiments of the invention will be explained below with reference to the drawings, in which:
- FIG. 1: is a block diagram of the interface card according to the present invention installed in a recording device of a first example,
- FIG. 2: is a block diagram of the interface card according to the present invention installed in a recording device of a second example,
- FIG. 3: is a flow chart showing procedure steps for transmission of data from the host computer to the recording device,
- FIG. 4: is a flow chart showing procedure steps for transmission of data from the host computer to the recording device up to a comparison of C/D performance,
- FIG. 5: is a flow chart showing procedure steps for decompression of the compressed data on the interface card, and
- FIG. 6: is a flow chart showing procedure steps for decompression of the compressed data on the control board of the recording device.

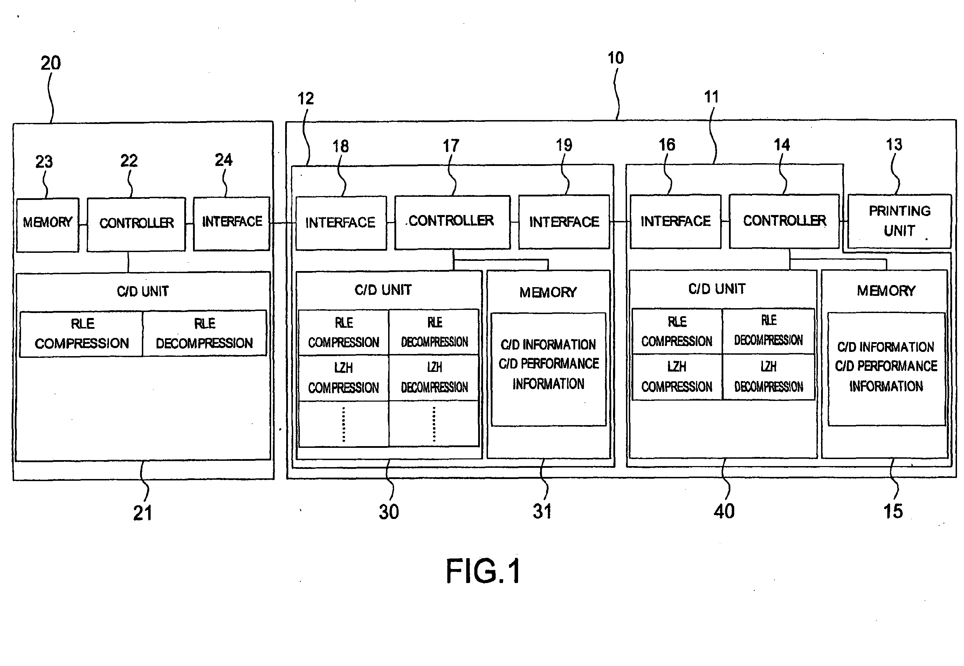

Referring to FIG. 1, a host computer 20 is connected to a printer as an example of a recording device 10. The printer 10 basically comprises a printing unit 13 including a paper feed mechanism, a printing mechanism etc., a control board 11 carrying the means for controlling the whole printer, and an interface card 12. The interface card is detachably mounted in the printer so that it can be easily removed and replaced by another interface card supporting another interface standard and/or other compression algorithms as will be explained below.

The interface card 12 combines on one board all the interface functions required for the printer 10 to communicate with the host computer 20. Accordingly, by replacing the interface card 12 with another one, it is possible to adapt the printer to one of various interface standards necessary for communication with a particular host computer.

All other functions in the printer 10 are implemented on the control board 11. That is, the control board 11 contains a controller 14 for controlling the printing unit 13, a memory 15 comprised of a ROM storing a program, font data, etc. and a RAM as a working memory for temporarily storing print data, control commands and other information, and an interface 16 for data exchange with the interface card 12.

The interface card 12 includes a C/D (compression/decompression) unit 30, a controller 17 for controlling the card, an interface 18 to implement interfacing with the host computer 20, and an interface 19 for communication with the interface 16 of the control board 11. While several interface standards like RS232, Centronics and USB may be provided on the same interface card 12 and selectively used, it is preferably to provide multiple interface cards each for a respective one of those interface standards. In this latter case, the card with the interface standard required for connection to a particular host computer will be installed in the printer.

Another C/D unit 40 is provided on the printer's control board 11. The C/D units 30 and 40 provide functions for compressing and decompressing the data exchanged with the host computer 20 including print data and control commands.

The C/D unit 30 and/or the C/D unit 40 can be designed to operate on the basis of a single built-in C/D algorithm or a selected one of multiple built-in C/D algorithms, such as run-length encoding (RLE), Huffman encoding or a DCT (Discrete Cosine Transform) encoding, as shown in the drawing. In this embodiment, the C/D unit 40 supports at least one of a plurality of C/D algorithms supported by the C/D unit 30 of the interface card 12. Data compressed by an algorithm supported by both the C/D unit 30 and the C/D unit 40 can be decompressed by using either one of the two C/D units. Also, data compression with such algorithm is possible by using either one of these two C/D units. Thus, as will be explained in more detail later, the decompressing function of either the C/D unit 30 or the C/D unit 40 can be used for restoring compressed data received from the host computer 20 to the original data, while the compressing function of either the C/D unit 30 or the CID unit 40 can be used to compresses data to be sent to the host computer 20.

At least one of the C/D units 30 and 40 is required to decompress data compressed by a C/D unit 21 in the host computer 20. Also, the C/D unit 21 must be able to decompress data compressed by the C/D unit 30 or the C/D unit 40. Therefore, at least one of the C/D units 30 and 40 needs to support at least one of the C/D algorithms implemented in the C/D unit 21.

A memory 31 of the interface card 12 stores C/D information. In the present embodiment this information is stored in the form of a table including information such as the types of printer (control boards) to which the interface card can connect, the C/D algorithm(s) supported by each of those printers and the C/D algorithm(s) supported by the interface card 12 itself. Preferably, memory 15 stores corresponding C/D information at least when a C/D function is implemented on the control board 11.

Controller 17 reads such C/D information from memory 31. Controller 17 also requires controller 14 of control board 11 to read and transmit C/D information stored in memory 15, if any. Based on such information controller 17 knows whether a C/D function is implemented on control board 11 and, if it is, what algorithms are supported. In this embodiment, the C/D algorithm used for data exchange with the host computer 20 is selected from the algorithms supported by both the host computer 20 and at least one of the interface card 12 and the control board 11.

Furthermore, both memories 15 and 31 of the control board 11 and interface card 12 store respective C/D performance information. The C/D performance information stored in memories 15 and 31 comprises one or more items of numerical information indicating the processing performance of data compression and decompression of the C/D units 30 and 40. Stored in the memory 15 is such C/D performance information for the C/D unit 40, and stored in the memory 13 is such C/D performance information for the C/D unit 30. The C/D performance information includes, for example, the kinds of algorithm supported by the respective C/D unit 30 or 40, and for each algorithm the data compression ratio, the amount of data processing required for compressing and decompressing per byte, and the compression and decompression block size. The transfer rate between the interface card 12 and control board 11 and the throughput of the controllers 17 and 14 may be stored in both memories 15 and 31 or in one or a the respective one of them. The transfer rate is preferably stored in memory 15 and the throughputs of controllers 14 and 17 are preferably stored in memories 15 and 31, respectively. It will be understood, that in the latter case provisions are taken enabling controller 17 to obtain information about the transfer rate and the throughput of controller 14 by sending a corresponding inquiry to controller 14.

If the C/D unit 30 or 40 supports a plurality of C/D algorithms, the respective memory 31 or 15 can store the C/D performance information for each of these algorithms.

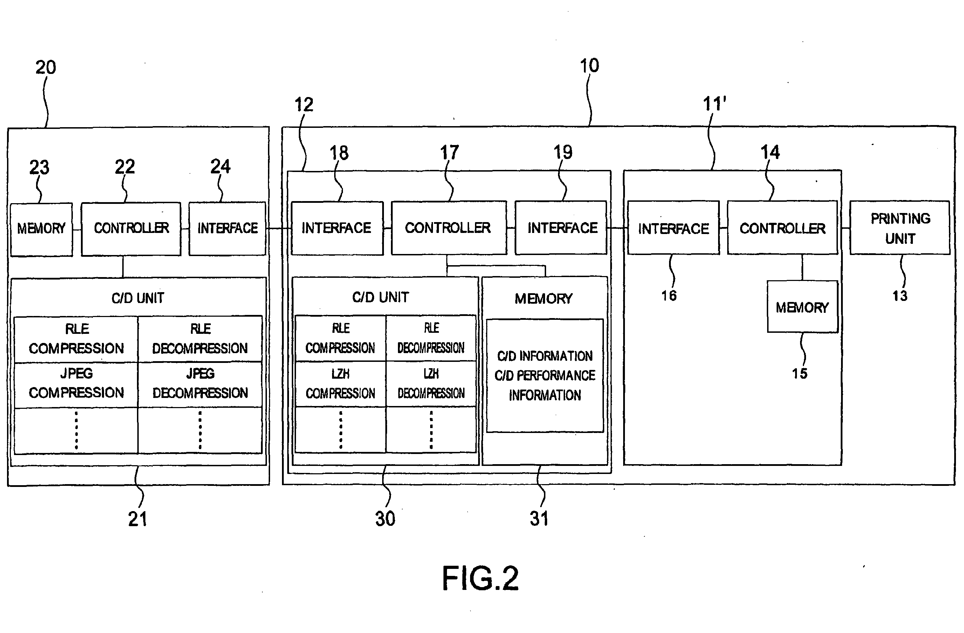

Referring to Fig. 2, another example of a printer is shown that differs from the previous one in that the control board 11 is replaced by a control board 11'. While the interface card 12 is the same, control board 11' does not contain the C/D unit 40.

In establishing a transmission between the host computer 20 and the printer 10, before the host computer starts compressing data or the printer or interface card starts compressing data to be sent to the host computer, the host computer 20 and the interface card 12 have to negotiate to determine the C/D algorithm to be used. This ensures that the compressed data can be correctly decompressed in the printer 10 and the host computer, respectively.

The program executed by the controller 17 of the interface card 12 checks whether or not it is connected to control board 11 or control board 11', i.e., whether the control board has its own C/D function. If is has, controller 17 compares the C/D performance information stored in memory 15 with that stored in memory 31. The controller 17 reads the C/D performance information out of each of the memories 15 and 31 to compare them so as to enable that one of the two C/D units that promises the higher performance, and to disable the other one. For example, where, as a result of the performance comparison, the interface card 12 is held to have higher performance for compressing/decompressing data than control board 11, the C/D unit 30 in the interface card 12 is enabled to execute compression and decompression of data exchanged between the host computer and the printer. The performance comparison may be conducted when data compression and decompression is required for the first time , e.g. when the interface card 12 is replaced, and the result may then be stored in a non-volatile memory. In such case, the performance comparison needs only be performed once.

While the above refers to comparing the C/D performance information of C/D unit 30 with that of C/D unit 40, preferably the total performance of the data compression/decompression is determined, namely taking account of the data transfer rate between the interface card 12 and the control board 11. This total performance is determined for the case of enabling C/D unit 30 and the case of enabling C/D unit 40, and the results are compared. Making the decision upon which of the two C/D units to use dependent on the total performance is advantageous where the transfer rate between the interface card 12 and the control board 11 is relatively low. In this case it is more favorable to exchange compressed data between them. Accordingly, in processing of compressed data from the host computer, there may be a better total performance by enabling the C/D unit 40 of the control board 11 even though its performance is somewhat inferior to that of the C/D unit 30 of the interface card 12. This does at least apply to the case where both C/D units 30 and 40 support the C/D algorithm that is being used in the data exchange between the host computer and the printer. In a case where the host computer supports multiple C/D algorithms and each of C/D units 30 and 40 supports one or more C/D algorithms, there may be a case where, based on the total performance, a C/D algorithm is selected that is supported only in the C/D unit 40 or only in the C/D unit 30.

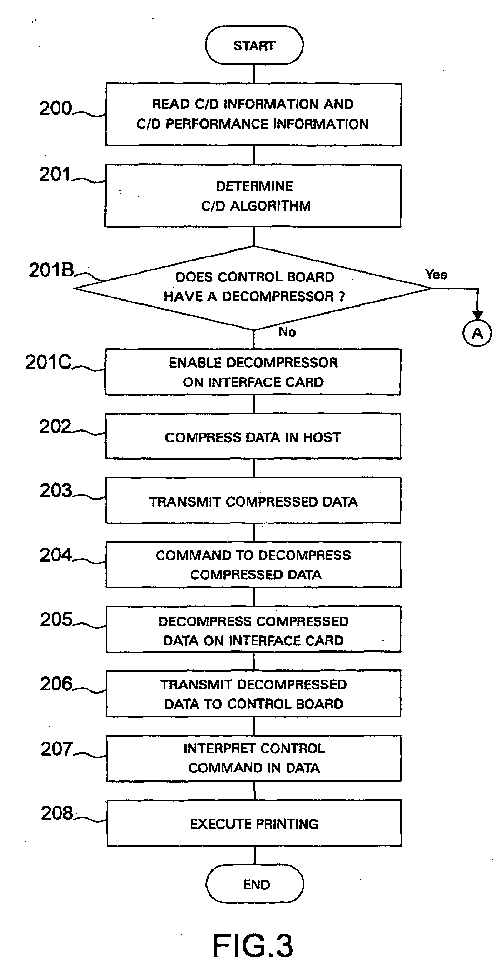

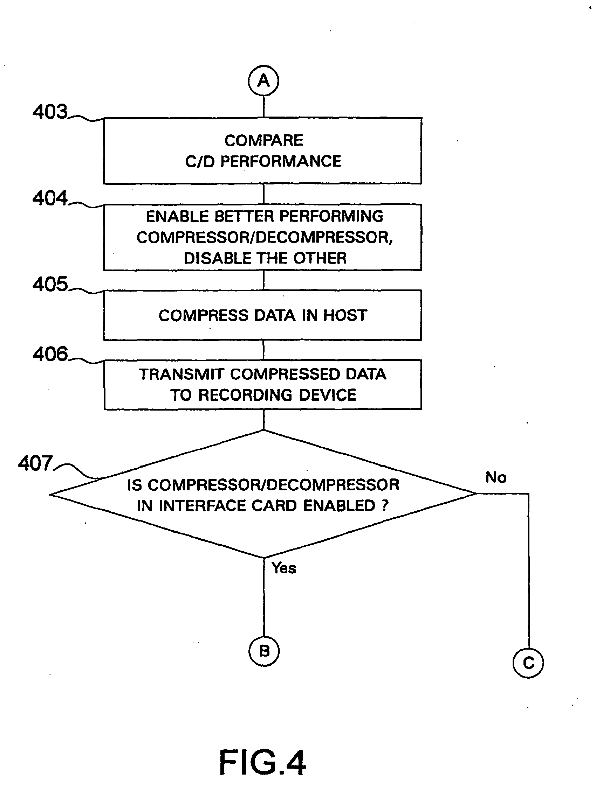

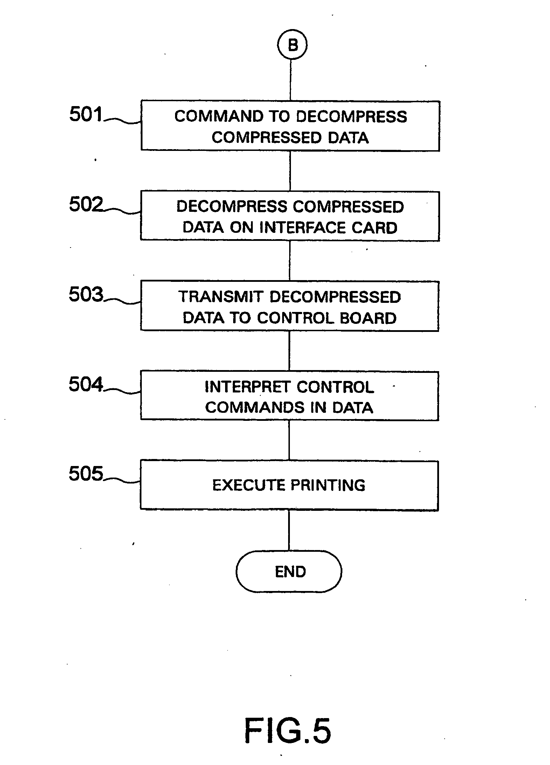

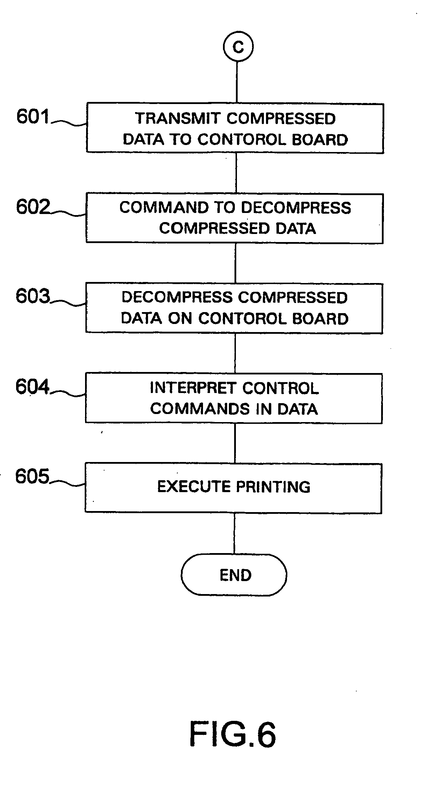

Referring to the flowcharts in FIG. 3 through Fig. 6 one example of a process of transferring data from the host computer 20 to the printer 10 so as to execute printing in the printer 10 will now be explained. Note that steps 200 to 208 are shown in Fig. 3, steps 403 to 407 in Fig. 4, steps 501 to 505 in Fig. 5 and steps 601 to 605 in Fig. 6.

The controller 17 of the interface card 12 reads C/D information and C/D performance information out of the memories 15 and 31, respectively (step 200). The controller 17 and the controller 22 of the host computer 20 then negotiate to determine the C/D algorithm to use before print data and control commands are transmitted to the printer 10 (step 201). For example, in FIG. 1, the RLE algorithm is determined. Preferably, the C/D algorithm with the highest compression ratio is selected out of those supported by the C/D unit 21 and at least one of C/D units 30 and 40.

The controller 17 checks whether or not the control board 11/11' has a C/D unit 40 and, if so, whether or not the C/D unit 40 supports the determined algorithm (step 201B). If there is no C/D unit 40, as in the example illustrated in Fig. 2, or an existing C/D unit does not support the algorithm determined in step 201, the controller 17 enables the C/D unit 30 to decompress the data received form the host computer 20 (step 201C).

Then, the data to be sent to the printer are compressed in the C/D unit 21 in accordance with the determined algorithm (step 202). Upon completion of data compression, the controller 22 sends the compressed data to the printer through the interface 24 (step 203).

In the printer 10, the controller 17 instructs the C/D unit 30 to decompress the data received through the interface 18 (204). Accordingly, the C/D unit 30 decompresses the data in accordance with the previously determined algorithm (step 205).

The decompressed data are then transmitted to the control board 11 through the interface 19 (step 206). The controller 14 of the control board 11 interprets any control command contained in the decompressed data (step 207) and executes printing in accordance with the decompressed data (step 208).

If, on the other hand, step 201B reveals that there is a C/D unit 40 on the control board, as is the case with control board 11 in the example illustrated in Fig. 1, and this C/D unit supports the determined algorithm, the controller 17 compares the decompression performance of the control board 11 with that of the interface card 12 (step 403), based on the C/D performance information read out of the memories 15 and 31 in step 200.

Depending on the comparison result and in accordance with the criteria explained above, the controller 17 enables either the C/D unit 30 or the C/D unit 40 (step 404). For example, C/D unit 30 is enabled, and C/D unit 40 is disabled. Controller 17 enables or disables C/D unit 40 by instructing controller 14 to do it.

In the host computer 20, data are compressed in accordance with the RLE algorithm (step 405) and the compressed data are sent to the printer 10 through the interface 24 (step 406).

In the printer 10, the controller 17 of the interface card 12 checks whether or not its own C/D unit 30 is enabled (step 407). If it is enabled, a command is given to the C/D unit 30 to decompress the received data (step 501). In accordance with the command the C/D unit 30 decompresses the compressed data (step 502). Then, the decompressed data are transmitted to the control board 11 through the interface 19 (step 503). The controller 14 of the control board 11 interprets any control command contained in the decompressed data (step 504) to execute printing in accordance with the decompressed data (505).

On the other hand, in step 407, if the C/D unit 30 of the interface card 12 is found disabled, the controller 17 transfers the compressed data to the control board 11 through the interface 19 (step 601). The controller 14 of the control board 11 gives a command to decompress the received data after confirming that its own C/D unit 40 is enabled (step 602). In accordance with the command the C/D unit 40 decompresses the compressed data (step 603). Then, the controller 14 interprets any control command contained in the decompressed data (604) to execute printing in accordance with the decompressed data (step 605).

As described above, compression and decompression of data in the optimum manner is always achieved by comparing the performance of both C/D units 30 and 40 to execute data compression and decompression using the unit with the higher performance; this applies even if the performance of the interface card 12 is changed due to replacement of the card.

In case of the example shown in FIG. 1, if the C/D units 30 and 40 both support an algorithm with a compression ratio (for example, Huffman coding) higher than that of the C/D algorithm supported by the C/D unit 21 of the host computer 20 (for example, RLE), it is possible to adopt an arrangement in which the data, after having been decompressed on the interface card 12, are compressed again with higher compression ratio on the interface card 12 and these compressed data are then transferred to the control board 11. Finally the data are decompressed by the C/D unit 40 of the control board 11. This is effective if the transfer rate between the interface card 12 and the control board 11 is low.

In the embodiments explained above, each of the memories 15 and 31 stores the C/D performance information only of the corresponding one of the two C/D units. Alternatively, both memories may store performance information of each of the two C/D units. In this case, the controller 17 can compare the C/D performance based on information available from its on memory 31.

While units 30 and 40 have been described as C/D units capable of compressing and decompressing, the compressing function is not always necessary for the interface card 12 and/or the control board 11. Typically, the amount of data sent from the printer to the host computer is small compared to the amount of data sent in the opposite direction. There may be cases, however, where a higher amount of data needs to be sent to the host computer, so that compressing these data on the printer/interface board side could improve the overall throughput. This may, for instance, be the case where a scanner is integrated with the printer.

## Claims

1. An interface card for connecting a recording device (10) to a host computer (20), comprising:
a first interface (18) for detachably connecting the interface card to a host computer (20) and for receiving data from and sending data to the host computer (20),
a second interface (19) for detachably connecting the interface card to a control board of a recording device (10) and for sending data to and receiving data from the control board (11, 11'),
first decompression means (30) for decompressing data received through said first interface (18);
memory means (31) storing first control data indicating the performance of said first decompression means (30); and
control means (17), said control means comprising
first means responsive to second control data to determine whether said control board (11, 11') is equipped with second decompression means (40), the second control data being either also stored in said memory means (31) or received through said second interface (19),
second means adapted to compare, if the first means determine that said control board (11, 11') is equipped with the second decompression means (40), said first control data with third control data indicating the performance of said second decompression means (40), said third control data being either also stored in said memory means (31) or received through said second interface (19), and
third means responsive to said second means for disabling said first decompression means (30) and for causing said second interface (19) to send via said second interface the data received through said first interface (18), when said third control data indicate a better performance than do said first control data.

2. The interface card according to claim 1, wherein said first decompression means (30) is adapted to decompress said received data in accordance with a selected one of a plurality of different algorithms.

3. The interface card according to claim 1 or 2, further comprising first compression means (30) for compressing data to be sent through said first interface (18).

4. The interface card according to claim 3, wherein
said memory means (31) stores fourth control data indicating the performance of said first compression means (30), and
said control means further comprises:
fourth means responsive to fifth control data to determine whether said control board (11, 11') is equipped with second compression means (40), the fifth control data being either also stored in said memory means (31) or received through said second interface (19),
fifth means responsive to said fourth means to compare, if said control board (11, 11') is equipped with second compression means (40), said fourth control data with sixth control data indicating the performance of said second compression means (40), said sixth control data being either also stored in said memory means (31) or received through said second interface (19), and
sixth means responsive to said fifth means for disabling said first compression means (30) and for causing said first interface (19) to send via said first interface (18) data received through said second interface (18), when said sixth control data indicate a better performance than do said fourth control data.

5. The interface card according to claim 3 or 4, wherein said first compression means (30) is adapted to compress data received through said second interface (19) in accordance with a selected one of a plurality of different algorithms.

6. A recording device including
a control board having a controller (14) for controlling said recording device, and the interface card as defined in any one of claims 1 to 5, said interface card being detachably connected to said control board (11, 11') of the recording device.

7. The recording device according to claim 6, wherein said control board (11) comprises:
a third interface (16) connected to said second interface (19) for receiving data from and sending data to said interface board (12),
second decompression means (40) for decompressing data received through said third interface (18), and
memory means (15) storing said third control data indicating the performance of said second decompression means (40),
wherein said controller (14) is responsive to a command received through said third interface (16) for disabling said second decompression means.

8. The recording device according to claim 7, wherein said second decompression means (40) is adapted to decompress the data received through said third interface (16) in accordance with a selected one of a plurality of different algorithms.

9. The recording device according to claim 7 or 8, wherein said control board (11) further comprises second compression means (30) for compressing data to be sent through said third interface (16).

10. The recording device according to claim 9, wherein said second compression means (40) is adapted to compress data to be sent through said third interface (19) in accordance with a selected one of a plurality of different algorithms.

11. The recording device according to any one claims 6 to 10 wherein said control means (17) and said controller (14) are implemented by respective program-controlled microprocessors.

12. A method of sending data from a host computer to a recording device as defined in any one of claims 6 to 10, comprising the steps of;
(a) determining an algorithm for compression/decompression of said data, which is supported by both the host computer (20) and at least one of the interface card (12) and the control board (11, 11'),
(b) checking whether or not the control board is capable of decompressing data,
(c) comparing, if step (b) reveals that the control board is capable of decompressing data, the data processing performance for a first case with that for a second case, the first case being that data are decompressed on the control board (11) and the second case being that the data are decompressed on the interface card,
(d) compressing the data in the host computer (20) in accordance with the algorithm determined in the step (a), and sending the compressed data to the interface card (12),
(e) decompressing, if step (b) reveals that the control board is not capable of decompressing data, the compressed data on the interface card (12), and sending the decompressed data to the control board, while otherwise
(g) decompressing the compressed data either on the control board (11) or on the interface board depending on whether step (c) reveals the data processing performance is better for the first case or is better for the second case.

13. A machine readable recording medium carrying computer program code means which when executed in said host computer (20), said interface card (12) and said control board (11), respectively, perform the method of claim 12.

## Patentansprüche

1. Schnittstellenkarte zum Verbinden eines Aufzeichnungsgeräts (10) mit einem Host-Computer (20), aufweisend:
eine erste Schnittstelle (18) zur lösbaren Verbindung der Schnittstellenkarte mit dem Host-Computer (20) und zum Empfangen und Senden von Daten vom und zum Host-Computer (20);
eine zweite Schnittstelle (19) zur lösbaren Verbindung der Schnittstellenkarte mit einer Steuerplatine (11, 11') des Aufzeichnungsgeräts (10) und zum Senden und Empfangen von Daten zu der und von der Steuerplatine,
ein erstes Dekomprimierungsmittel (30) zum Dekomprimieren der über die erste Schnittstelle (18) empfangenen Daten;
ein Speichermittel (31) zum Speichern erster Steuerdaten, die die Leistungsfähigkeit des ersten Dekomprimierungsmittels (30) angeben; und
ein Steuermittel (17), wobei das Steuermittel aufweist:
ein erstes Mittel, das auf zweite Steuerdaten anspricht, um zu bestimmen, ob die Steuerplatine (11, 11') mit einem zweiten Dekomprimierungsmittel (40) ausgestattet ist, wobei die zweiten Steuerdaten entweder ebenfalls im Speichermittel (31) gespeichert sind oder über die zweite Schnittstelle (19) empfangen werden,
ein zweites Mittel, das dazu eingerichtet ist, wenn das erste Mittel bestimmt, dass die Steuerplatine (11, 11') mit dem zweiten Dekomprimierungsmittel (40) ausgestattet ist, die ersten Steuerdaten mit dritten Steuerdaten zu vergleichen, die die Leistungsfähigkeit des zweiten Dekomprimierungsmittels (40) angeben, wobei die dritten Steuerdaten entweder ebenfalls im Speichermittel (31) gespeichert sind oder über die zweite Schnittstelle (19) empfangen werden, und
ein drittes Mittel, das auf das zweite Mittel anspricht, um das erste Dekomprimierungsmittel (30) zu deaktivieren und um die zweite Schnittstelle (19) zu veranlassen, die über die erste Schnittstelle (18) empfangenen Daten über die zweite Schnittstelle zu senden, wenn die dritten Steuerdaten eine bessere Leistungsfähigkeit angeben als die ersten Steuerdaten.

2. Schnittstellenkarte nach Anspruch 1, bei der das erste Dekomprimierungsmittel (30) dazu eingerichtet ist, die empfangenen Daten gemäß einem aus einer Mehrzahl verschiedener Algorithmen gewählten Algorithmus zu dekomprimieren.

3. Schnittstellenkarte nach Anspruch 1 oder 2, ferner ein erstes Komprimierungsmittel (30) zum Komprimieren der über die erste Schnittstelle (18) zu sendenden Daten aufweisend.

4. Schnittstellenkarte nach Anspruch 3, bei der
das Speichermittel (31) vierte Steuerdaten speichert, die die Leistungsfähigkeit des ersten Komprimierungsmittels (30) angeben, und
das Steuermittel ferner aufweist:
ein viertes Mittel, das auf fünfte Steuerdaten anspricht, um zu bestimmen, ob die Steuerplatine (11, 11') mit einem zweiten Komprimierungsmittel (40) ausgestattet ist, wobei die fünften Steuerdaten entweder ebenfalls im Speichermittel (31) gespeichert sind oder über die zweite Schnittstelle (19) empfangen werden,
ein fünftes Mittel, das auf das vierte Mittel anspricht, um, wenn die Steuerplatine (11, 11') mit dem zweiten Komprimierungsmittel (40) ausgestattet ist, die vierten Steuerdaten mit sechsten Steuerdaten zu vergleichen, die die Leistungsfähigkeit des zweiten Komprimierungsmittels (40) angeben, wobei die sechsten Steuerdaten entweder ebenfalls im Speichermittel (31) gespeichert sind oder über die zweite Schnittstelle (19) empfangen werden, und
ein sechstes Mittel, das auf das fünfte Mittel anspricht, um das erste Komprimierungsmittel (30) zu deaktivieren und um die zweite Schnittstelle (19) zu veranlassen, die über die erste Schnittstelle (18) empfangenen Daten über die zweite Schnittstelle (19) zu senden, wenn die sechsten Steuerdaten eine bessere Leistungsfähigkeit angeben als die vierten Steuerdaten.

5. Schnittstellenkarte nach Anspruch 3 oder 4, bei der das erste Komprimierungsmittel (30) dazu eingerichtet ist, die über die zweite Schnittstelle (19) empfangenen Daten gemäß einem aus einer Mehrzahl verschiedener Algorithmen gewählten Algorithmus zu komprimieren.

6. Aufzeichnungsgerät, das
eine Steuerplatine mit einer Steuerung (14) zur Steuerung des Aufzeichnungsgeräts und
die Schnittstellenkarte nach einem der Ansprüche 1 bis 5 enthält, wobei die Schnittstellenkarte lösbar mit der Steuerplatine (11, 11') des Aufzeichnungsgeräts verbunden ist.

7. Aufzeichnungsgerät nach Anspruch 6, bei dem die Steuerplatine (11) aufweist:
eine dritte Schnittstelle (16), die mit der zweiten Schnittstelle (19) verbunden ist, um Daten von der Schnittstellenplatine (12) zu empfangen und zu dieser zu senden,
ein zweites Dekomprimierungsmittel (40) zum Dekomprimieren der über die dritte Schnittstelle (16) empfangenen Daten, und
ein Speichermittel (15), das dritte Steuerdaten speichert, die die Leistungsfähigkeit des zweiten Dekomprimierungsmittels (40) angeben,
bei dem die Steuerung (14) auf einen über die dritte Schnittstelle (16) empfangenen Befehl zum Deaktivieren des zweiten Dekomprimierungsmittels anspricht.

8. Aufzeichnungsgerät nach Anspruch 7, bei dem das zweite Dekomprimierungsmittel (40) dazu eingerichtet ist, die über die dritte Schnittstelle (16) empfangenen Daten gemäß einem aus einer Mehrzahl verschiedener Algorithmen gewählten Algorithmus zu dekomprimieren.

9. Aufzeichnungsgerät nach Anspruch 7 oder 8, bei dem die Steuerplatine (11) ferner ein zweites Komprimierungsmittel (40) zum Komprimieren der über die dritte Schnittstelle (16) zu sendenden Daten aufweist.

10. Aufzeichnungsgerät nach Anspruch 9, bei dem das zweite Komprimierungsmittel (40) dazu eingerichtet ist, die über die dritte Schnittstelle (16) zu sendenden Daten gemäß einem aus einer Mehrzahl verschiedener Algorithmen gewählten Algorithmus zu komprimieren.

11. Aufzeichnungsgerät nach einem der Ansprüche 6 bis 10, bei dem das Steuermittel (17) und die Steuerung (14) durch jeweilige programmgesteuerte Mikroprozessoren implementiert sind.

12. Verfahren zum Senden von Daten von einem Host-Computer an ein Aufzeichnungsgerät nach einem der Ansprüche 6 bis 10, mit den Schritten:
(a) Bestimmen eines Algorithmus zum Komprimieren/Dekomprimieren der Daten, der sowohl vom Host-Computer (20) als auch von zumindest entweder der Schnittstellenkarte (12) oder der Steuerplatine (11, 11') unterstützt wird,
(b) Prüfen, ob die Steuerplatine in der Lage ist, Daten zu dekomprimieren oder nicht,
(c) wenn Schritt (b) zeigt, dass die Steuerplatine in der Lage ist, Daten zu dekomprimieren, Vergleichen der Datenverarbeitungsleistung für einen ersten Fall mit der für einen zweiten Fall, wobei der erste Fall derjenige ist, bei dem Daten durch die Steuerplatine (11) dekomprimiert werden, und der zweite Fall derjenige ist, bei dem die Daten durch die Schnittstellenkarte dekomprimiert werden,
(d) Komprimieren der Daten im Host-Computer (20) gemäß dem in Schritt (a) bestimmten Algorithmus und Senden der komprimierten Daten an die Schnittstellenkarte (12),
(e) wenn Schritt (b) zeigt, dass die Steuerplatine nicht in der Lage ist, Daten zu dekomprimieren, Dekomprimieren der komprimierten Daten auf der Schnittstellenkarte (12) und Senden der dekomprimierten Daten an die Steuerplatine, sonst
(g) Dekomprimieren der komprimierten Daten entweder auf der Steuerplatine (11) oder auf der Schnittstellenplatine, je nachdem, ob Schritt (c) eine bessere Datenverarbeitungsleistung für den ersten oder für den zweiten Fall ergibt.

13. Maschinenlesbares Aufzeichnungsmedium, das Computerprogramm-Codemittel trägt, bei deren Ausführung im Host-Computer (20) die Schnittstellenkarte (12) bzw. die Steuerplatine (11) das Verfahren gemäß Anspruch 12 ausführen.

## Revendications

1. Carte d'interface pour connecter un dispositif (10) d'enregistrement à un ordinateur (20) hôte, comprenant :
une première interface (18) pour connecter de façon amovible la carte d'interface à un ordinateur (20) hôte et pour recevoir des données en provenance de l'ordinateur (20) hôte et lui envoyer des données,
une deuxième interface (19) pour connecter de façon amovible la carte d'interface à une carte de commande d'un dispositif (10) d'enregistrement pour envoyer des données à la carte (11, 11') de commande et en recevoir des données,
un premier moyen (30) de décompression pour décomprimer des données reçues par l'intermédiaire de la première interface (18) ;
un moyen (31) à mémoire mémorisant des premières données de commande indiquant les performances du premier moyen (30) de décompression ; et
un moyen (17) de commande, le moyen de commande comprenant :
un premier moyen sensible à des deuxièmes données de commande pour déterminer si la carte (11, 11') est équipée d'un deuxième moyen (40) de décompression, les deuxièmes données de commande étant également soit mémorisées dans ledit moyen (31) à mémoire, soit reçues par l'intermédiaire de la deuxième interface (19),
un deuxième moyen apte à comparer, si le premier moyen détermine que la carte (11, 11') de commande est équipée du deuxième moyen (40) de décompression, les premières données de commande à des troisièmes données de commande indiquant les performances du deuxième moyen (40) de décompression, les troisièmes données de commande étant également soit mémorisées dans le moyen (31) à mémoire, soit reçues par l'intermédiaire de la deuxième interface (19), et
un troisième moyen sensible au deuxième moyen pour désactiver le premier moyen (30) de décompression et pour faire en sorte que la deuxième interface (19) envoie par l'intermédiaire de la deuxième interface les données reçues par l'intermédiaire de la première interface (18) lorsque les troisièmes données de commande indiquent de meilleures performances que celles indiquées par les premières données de commande.

2. Carte d'interface suivant la revendication 1,
dans laquelle le premier moyen (30) de décompression est apte à décomprimer les données reçues en conformité avec l'un, sélectionné, d'une pluralité d'algorithmes différents.

3. Carte d'interface suivant la revendication 1 ou 2, comportant en outre un premier moyen (30) de décompression pour comprimer des données devant être envoyées par l'intermédiaire de la première interface (18).

4. Carte d'interface suivant la revendication 3, dans laquelle :
le moyen (31) à mémoire mémorise des quatrièmes données de commande indiquant les performances du premier moyen (30) de décompression, et
le moyen de commande comprend en outre :
un quatrième moyen sensible à des cinquièmes données de commande pour déterminer si la carte (11, 11') de commande est équipée d'un deuxième moyen (40) de compression, les cinquièmes données de commande étant également soit mémorisées dans le moyen (31) à mémoire, soit reçues par l'intermédiaire de la deuxième interface (19),
un cinquième moyen sensible au quatrième moyen pour comparer, si la carte (11, 11') de commande est équipée d'un deuxième moyen (40) de compression, les quatrièmes données de commande à des sixièmes données de commande indiquant les performances du deuxième moyen (40) de compression, les sixièmes données de commande étant également soit mémorisées dans le moyen (31) à mémoire, soit reçues par l'intermédiaire de la deuxième interface (19), et
un sixième moyen sensible au cinquième moyen pour désactiver le premier moyen (30) de compression et faire en sorte que la première interface (19) envoie par l'intermédiaire de la première interface (18) des données reçues par l'intermédiaire de la deuxième interface (18) lorsque les sixièmes données de commande indiquent de meilleures performances que celles indiquées par les quatrièmes données de commande.

5. Carte d'interface suivant la revendication 3 ou 4, dans laquelle le premier moyen (30) de compression est apte à comprimer des données reçues par l'intermédiaire de la deuxième interface (19) en conformité avec l'un, sélectionné, d'une pluralité d'algorithmes différents.

6. Dispositif d'enregistrement comprenant :
une carte de commande comportant une unité de commande (14) pour commander le dispositif d'enregistrement, et
la carte d'interface définie dans l'une quelconque des revendications 1 à 5, la carte d'interface étant connectée de façon amovible à la carte (11, 11') de commande du dispositif d'enregistrement.

7. Dispositif d'enregistrement suivant la revendication 7, dans lequel la carte (11, 11') de commande comprend :
une troisième interface (16) connectée à la deuxième interface (19) pour recevoir des données de la carte (12) d'interface et lui envoyer des données,
un deuxième moyen (40) de décompression pour décomprimer des données reçues par l'intermédiaire de la troisième interface (18), et
un moyen (15) à mémoire pour mémoriser les troisièmes données de commande indiquant les performances du deuxième moyen (40) de décompression,
dans lequel l'unité de commande (14) est sensible à une commande reçue par l'intermédiaire de la troisième interface (16) pour désactiver le deuxième moyen de décompression.

8. Dispositif d'enregistrement suivant la revendication 7, dans lequel le deuxième moyen (40) de décompression est apte à décomprimer des données reçues par l'intermédiaire de la troisième interface (16) en conformité avec l'un, sélectionné, d'une pluralité d'algorithmes différents.

9. Dispositif d'enregistrement suivant la revendication 7 ou 8, dans lequel la carte (11) de commande comprend en outre un deuxième moyen (30) de décompression pour décomprimer des données devant être envoyées par l'intermédiaire de la troisième interface (16).

10. Dispositif d'enregistrement suivant la revendication 9, dans lequel le deuxième moyen (40) de compression est apte à comprimer des données devant être envoyées par l'intermédiaire de la troisième interface (19) en conformité avec l'un, sélectionné, d'une pluralité d'algorithmes différents.

11. Dispositif d'enregistrement suivant l'une quelconque des revendications 6 à 10, dans lequel le moyen (17) de commande et l'unité de commande (14) sont mis en oeuvre sous la forme de microprocesseurs respectifs commandés par des programmes.

12. Procédé d'envoi de données d'un ordinateur hôte à un dispositif d'enregistrement suivant l'une quelconque des revendications 6 à 10, comprenant les étapes consistant à :
(a) déterminer un algorithme pour la compression/décompression des données qui est pris en charge à la fois par l'ordinateur (20) hôte et au moins l'une de la carte (12) d'interface et de la carte (11, 11') de commande,
(b) vérifier si oui ou non la carte de commande est capable de décomprimer les données,
(c) comparer, si l'étape (b) révèle que la carte de commande est capable de décomprimer les données, les performances de traitement des données correspondant à un premier cas à celles correspondant à un deuxième cas, le premier cas étant le fait que des données sont décomprimées sur la carte (11) de commande et le deuxième cas étant le fait que des données sont décomprimées sur la carte d'interface,
(d) comprimer les données dans l'ordinateur (20) hôte en conformité avec l'algorithme déterminé à l'étape (a), et envoyer les données comprimées à la carte (12) d'interface,
(e) décomprimer, si l'étape (b) révèle que la carte de commande n'est pas capable de décomprimer les données, les données comprimées sur la carte (12) d'interface, et envoyer les données décomprimées à la carte de commande, tandis que dans le cas contraire,
(g) décomprimer les données comprimées soit sur la carte (11) de commande, soit sur la carte d'interface selon que l'étape (c) révèle que les performances de traitement des données sont meilleures dans le premier cas ou meilleures dans le deuxième cas.

13. Support d'enregistrement lisible sur machine portant un moyen à base de code de programme informatique qui, lorsqu'il est exécuté sur l'ordinateur (20) hôte, la carte (12) d'interface et la carte (11) de commande, respectivement, met en oeuvre le procédé suivant la revendication 12.
